# EUROPÄISCHE PATENTSCHRIFT

(11) **EP 1 436 536 B1**
(45) Veröffentlichungstag und Bekanntmachung des Hinweises auf die Patenterteilung: **21.09.2005**
(21) Anmeldenummer: 03797213.0
(22) Anmeldetag: 25.07.2003
(51) Int. Cl.: F16K 11/20, F16K 31/54

(54) **MISCHBATTERIE**
MIXER TAP
ROBINET MELANGEUR

(30) Priorität: 21.08.2002 DE 10239177
(43) Veröffentlichungstag der Anmeldung: 14.07.2004
(73) Patentinhaber: Grohe Water Technology AG & Co. KG, 58675 Hemer (DE)
(72) Erfinder: PAWELZIK, Manfred, 59494 Soest (DE); HANNEMANN, Fred, 04916 Herzberg (DE)
(86) Internationale Anmeldenummer: PCT/EP2003/008234
(87) Internationale Veröffentlichungsnummer: WO 2004/027299

(56) Entgegenhaltungen:
- FR-A- 2 565 658
- US-A- 2 633 872

## Beschreibung

Die Erfindung betrifft eine Mischbatterie mit einem Gehäuse, das Anschlüsse für Kalt- und Heißwasser sowie wenigstens einen Auslass für Kalt-, Heiß- oder Mischwasser aufweist, und in dem zwei parallel angeordnete Ventile für den separaten Zufluss von Kalt- oder Heißwasser angeordnet sind, wobei die beiden Ventile jeweils eine Ventilspindel aufweisen, die einerseits mit einem Ventilglied und andererseits mit einem, mit einer Betätigungseinrichtung koppelbaren Zahnrad verbunden ist.

Eine derartige Mischbatterie ist aus der Druckschrift DE 38 20 855 A1 bekannt geworden. Bei dieser Mischbatterie ist ein einen relativ großen Durchmesser aufweisender, gedrungen bauender, haubenförmiger Bediengriff für die Betätigung der beiden Ventile vorgesehen. Hierbei ist der Bediengriff vom Benutzer beim Zapfvorgang von Kaltwasser oder Heißwasser in unterschiedliche Richtungen zu drehen, wobei es zu unerwünschten Verwechslungen kommen kann. Außerdem sind die Zahnräder der beiden Ventile nicht immer mit der Verzahnung des Bediengriffs in Eingriff, so dass ungünstige Zahnradstellungen am Beginn des Kämmvorgangs der Verzahnungen, die eine Drehbewegung des Bediengriffs hindern können, nicht völlig auszuschließen sind.

Der Erfindung liegt die Aufgabe zugrunde, eine Mischbatterie mit einer einfach und sicher zu bedienenden Stelleinrichtung zu schaffen, die eine relativ schlanke Bauform der Mischbatterie ermöglicht und die vielseitig einsetzbar ist.

Diese Aufgabe wird erfindungsgemäß bei einer gattungsgemäßen Mischbatterie dadurch gelöst, dass als Betätigungseinrichtung zwei, am Gehäuse drehbar angeordnete Stellringe mit umlaufender Innenverzahnung vorgesehen sind, wobei die Innenverzahnung jeweils eines Stellringes in jeder Drehstellung mit jeweils einem Zahnrad eines der Ventile in Eingriff steht.
Weitere Ausgestaltungen der Erfindung sind in den Ansprüchen 2 bis 22 angegeben.

Die mit der Erfindung erzielbaren Vorteile bestehen insbesondere darin, dass die Bedienung der Mischbatterie für den Benutzer äußerst einfach ist und Bedienungsfehler weitgehend ausgeschlossen werden können. Außerdem kann mit den vorgeschlagenen Maßnahmen die Mischbatterie mit einem schlanken Design erstellt werden. Darüber hinaus kann die Mischbatterie sowohl mit einem unterhalb der Stellringe angeordneten, seitlich oder nach unten gerichteten Mischwasserauslauf als auch mit einem oberhalb der Stellringe angeordneten Mischwasserauslauf versehen sein.

In weiterer Ausgestaltung der Erfindung können die Stellringe vorteilhaft mit radial vorstehenden Hebeln versehen werden, so dass die Betätigung weiter vereinfacht wird.
Bei einer bevorzugten Ausführung der Erfindung sind in den Stellringen drehfest und im Wesentlichen spielfrei angeordnete Innenzahnräder vorgesehen, wobei die beiden Stellringe jeweils mit besonderen Gleit- und Führungsringen ausgestattet sind, die sowohl eine axiale als auch eine radiale, verschleißarme, leichtgängige und langlebige Führung gewährleisten. Der untere Stellring ist dabei von einem Gleitring am oberen Rand des Gehäuses abgestützt, während der obere Stellring von einem Gleitring an einer am Kopfstück gehaltenen Ringmutter abgestützt ist, wobei mit der Ringmutter das Axialspiel der Stellringe einstellbar ist.
Zur Verschleißminderung und Erhöhung der Langlebigkeit kann zweckmäßig das an der jeweiligen Ventilspindel der beiden Ventile angeordnete Zahnrad mit einer Schraube axial gesichert sein, die mit einem Zapfen in der Montagestellung in ein Stützlager im Kopfstück einfasst, so dass die durch den Antrieb über das Innenzahnrad des jeweiligen Stellrings erzeugte Radialkraft auf das Zahnrad am Ventil sicher aufgenommen werden kann. Hierbei kann noch zusätzlich das einzelne Zahnrad auf dem Ventil mit einer axial vorstehenden Hülse versehen sein, die in der Einbaulage einen am Kopfstück angeordneten Hohlzapfen zur weiteren Stützung aufnimmt.
Bei einem oberhalb der Stellringe angeordneten Wasserauslasskörper kann zweckmäßig auf dem Kopfstück ein Rohrnippel angeordnet werden, durch den das zufließende Mischwasser in den Wasserauslasskörper gelangt. Hierbei kann vorteilhaft die Ringmutter auf einem Außengewinde des Rohrnippels angeordnet werden. Dabei kann der Wasserauslaufkörper sowohl schwenkbar als auch feststehend angeordnet werden. Die Feststellung des Wasserauslaufkörpers kann hierbei zweckmäßig mit einer besonderen Feststellschraube der Ringmutter erreicht werden, die mit einem verlängerten Zapfen in eine Passbohrung des Wasserauslaufkörpers einfasst und die wahlweise Feststellung bewirkt.

Ausführungsbeispiele der Erfindung sind in der Zeichnung dargestellt und werden im Folgenden näher beschrieben. Es zeigt in der Zeichnung
- Figur 1: eine Wassermischbatterie in Seitenansicht, teilweise geschnitten;
- Figur 2: die in Figur 1 gezeigte Wassermischbatterie in der Schnittebene II;
- Figur 3: einen Teil der in Figur 1 gezeigten Wassermischbatterie im Bereich der Stellringe in vergrößerter Darstellung;
- Figur 4: den in Figur 3 gezeigten Teilbereich der Wassermischbatterie in der Schnittebene IV;
- Figur 5: einen Teil der in Figur 2 gezeigten Wassermischbatterie in vergrößerter Darstellung;
- Figur 6: die in Figur 1 gezeigten Stellringe mit den Hebeln in schematischer Darstellung in Ansicht von oben, wobei die Hebelpositionen bei geöffnetem Ventil in gestrichelten Linien dargestellt sind;
- Figur 7: die Stellringe mit den Hebeln für eine andere Wassermischbatterie in schematischer Darstellung in Ansicht von oben, wobei die Stellhebel in der Position der geöffneten Ventile in gestrichelten Linien dargestellt sind.

Der Einfachheit halber sind bei den Ausführungsbeispielen in der Zeichnung gleiche oder entsprechende Elemente mit jeweils gleichem Bezugszeichen versehen.

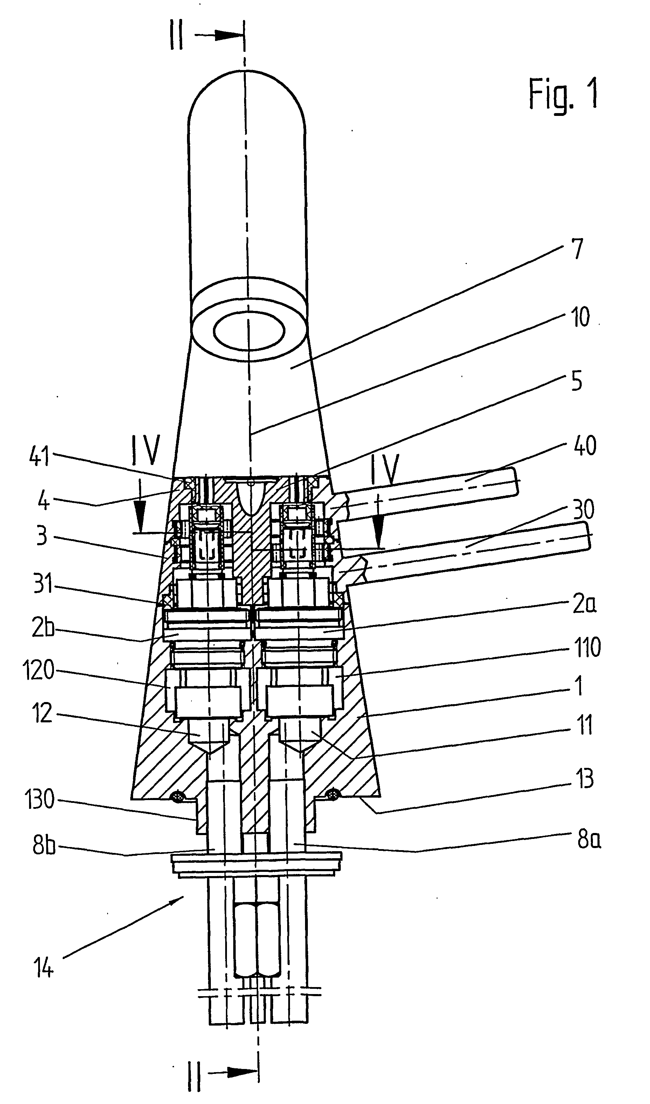

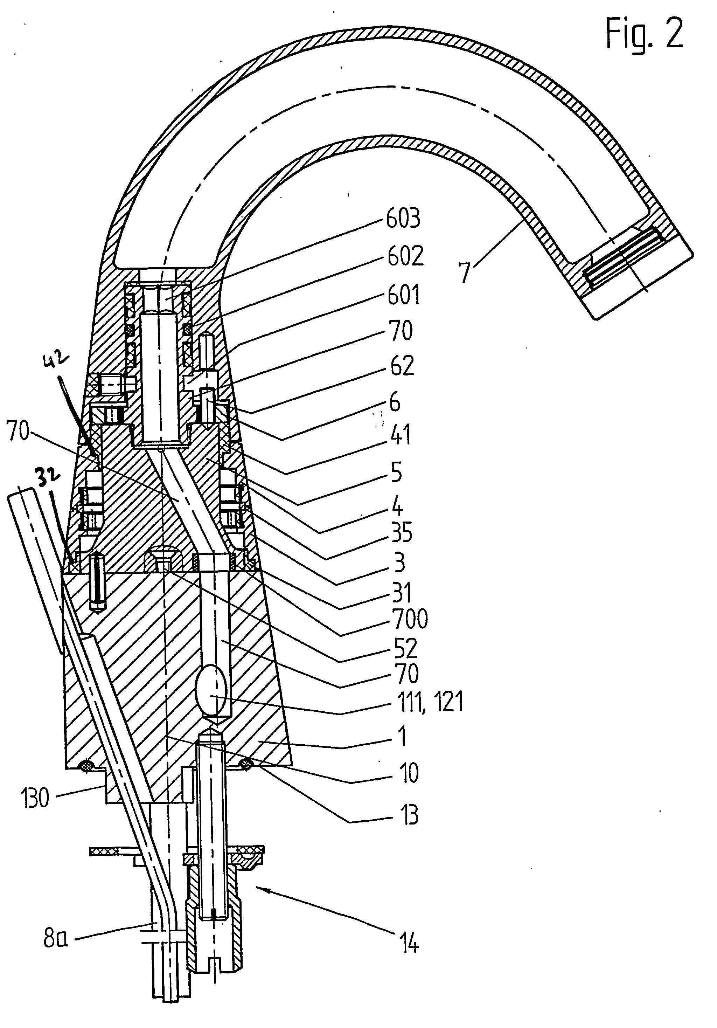

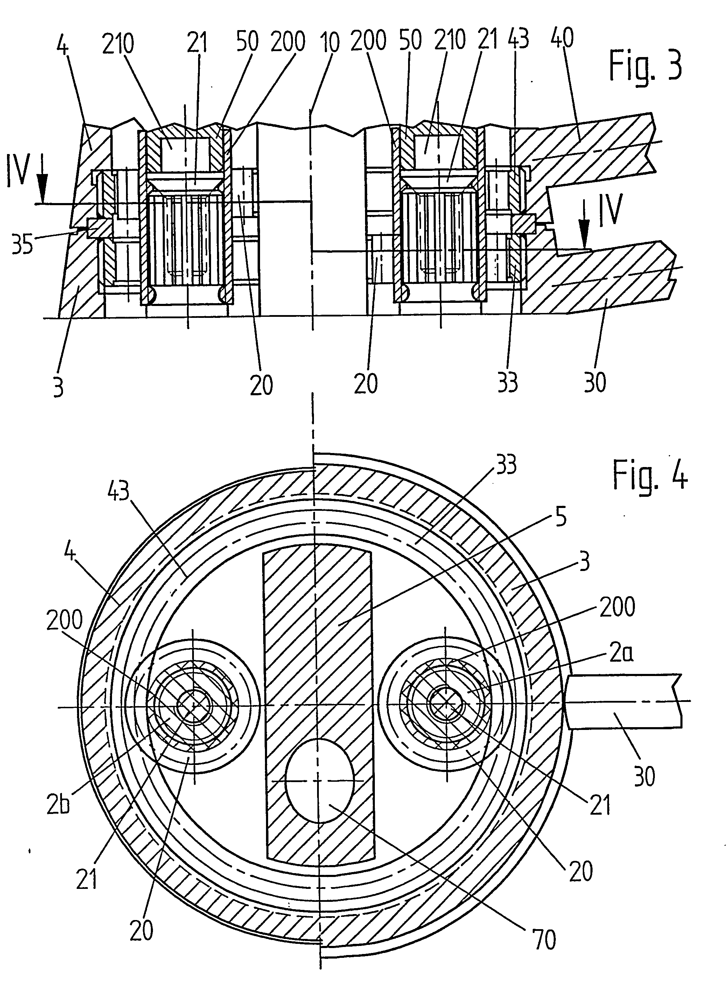

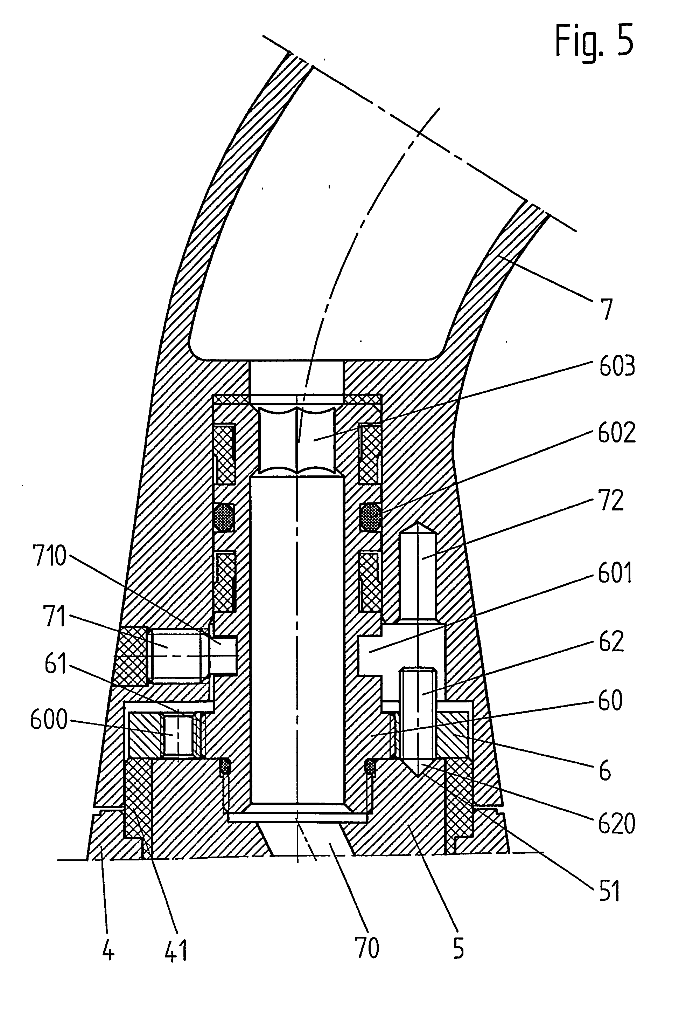

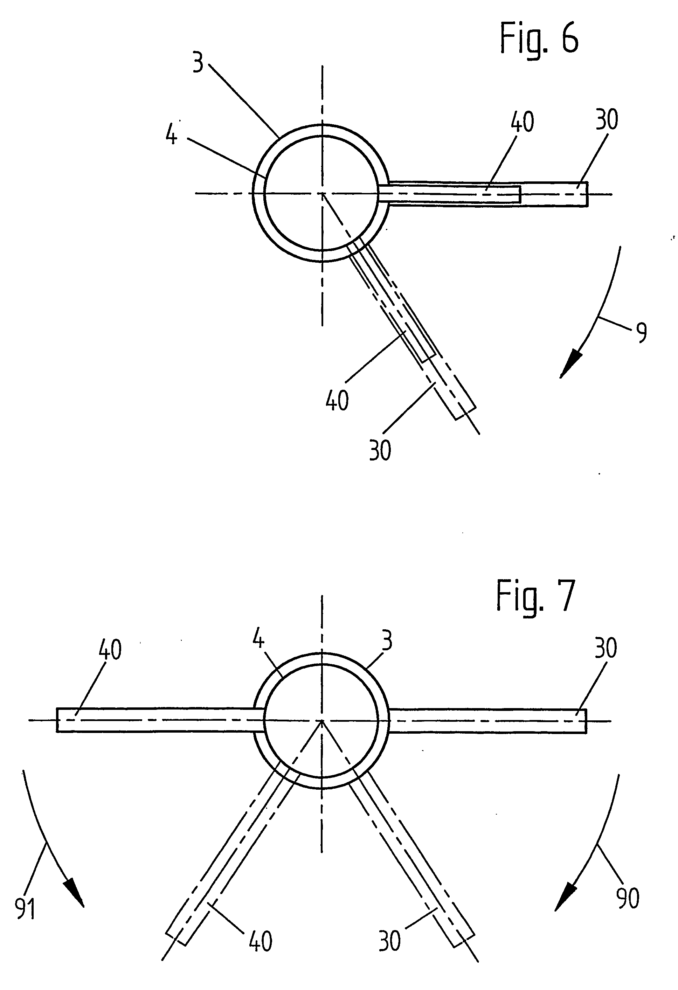

Die in Figur 1 bis 6 der Zeichnung dargestellte Wassermischbatterie enthält ein Gehäuse 1, zwei im Gehäuse 1 angeordnete Ventile 2a,2b, zwei Stellringe 3,4, ein am Gehäuse 1 angeschlossenes Kopfstück 5, eine am Kopfstück 5 gehaltene Ringmutter 6 sowie einen Wasserauslasskörper 7.
Das Gehäuse 1 ist mit einer stirnseitigen Anlagefläche 13 für die Anlage an einen in der Zeichnung nicht dargestellten Wasch- und/oder Spültisch versehen. Im Bereich der Anlagefläche 13 ist ein Zapfen 130 angeformt, mit dem das Gehäuse 1 in eine Öffnung des Wasch- und/oder Spültisches einfasst. Zur Befestigung der Wassermischbatterie an dem Wasch- und/oder Spültisch ist außerdem eine bekannte Spannvorrichtung 14 am Gehäuse 1 vorgesehen.
Im Bereich der Anlagefläche 13 des Gehäuses 1 ist außerdem eine Anschlussleitung 8a für Kaltwasser und eine Anschlussleitung 8b für Heißwasser vorgesehen. Das Anschlussrohr 8a ist mit einer Kaltwasserzuflusskammer 11 und das Anschlussrohr 8b mit einer Heißwasserzuflusskammer 12 verbunden. Die Kaltwasserzuflusskammer 11 mündet im Ventil 2a, während die Heißwasserzuflusskammer 12 im Ventil 2b mündet. Die beiden parallel zu einer Mittelachse 10 des Gehäuses 1 angeordneten Ventile 2a,2b sind bekannte Drehschieberventile mit zueinander verdrehbaren Keramikscheiben oder als bekannte Ventiloberteile ausgebildet. Das von dem Ventil 2a austretende Kaltwasser wird von einer separaten Kaltwasserabflusskammer 110 und das aus dem Ventil 2b austretende Heißwasser von einer separaten Heißwasserabflusskammer 120 aufgenommen. Die Kaltwasserabflusskammer 110 und die Heißwasserabflusskammer 120 ist jeweils mit einer separaten Stichbohrung 111,121 mit einem Mischwasserkanal 70 verbunden, in dem sich das durch die Stichbohrungen 111,112 zuströmende Kalt- und Heißwasser vermischt. Der Mischwasserkanal 70 ist im Gehäuse 1 parallel zu der Mittelachse 10 angeordnet, wie es insbesondere aus Figur 2 der Zeichnung zu entnehmen ist. Die beiden Ventile 2a,2b sind möglichst nahe beieinander parallel zur Mittelachse 10 im Gehäuse 1 mittels Gewinde und Dichtring gedichtet in bekannter Weise angeordnet, wobei die Kopfstücke der beiden Ventile 2a,2b aus der oberen Stirnseite des Gehäuses 1 vorstehen. Das Gehäuse 1 weist dabei eine, insbesondere im Blickfeld des Benutzers liegende, von der Anlagefläche 13 beginnende kegelförmige Verjüngung am Außenmantel auf.
An der oberen Stirnseite des Gehäuses 1 ist das Kopfstück 5 mit Befestigungsschrauben 52 befestigt. Der Mischwasserkanal 70 ist im Bereich der Stirnseite von einer Dichtung 700 gedichtet in einen gegen die Mittelachse 10 geneigten Bereich des Mischwasserkanals 70 im Kopfstück 5 verbunden. Im Kopfstück 5 sind Aussparungen für den aus dem Gehäuse 1 vorstehenden Bereich der Ventile 2a,2b vorgesehen.
Wie es insbesondere aus Figur 3 und 4 der Zeichnung zu entnehmen ist, ist auf jeweils einer aus den Ventilen 2a,2b vorstehenden Ventilspindeln jeweils ein Zahnrad 20 drehfest angeordnet. Zur axialen Sicherung der Zahnräder 20 ist jeweils eine Schraube 21 in den Ventilspindeln der Ventile 2a,2b vorgesehen. Die Schrauben 21 weisen dabei jeweils einen axial vorstehenden zylindrischen Zapfen 210 auf, mit dem sie in einen Hohlzapfen 50 des Kopfstücks 5 einfassen. Außerdem sind die Zahnräder 20 jeweils mit einer axial vorstehenden Hülse 200 versehen, die jeweils den Außenmantel eines Hohlzapfens 50 zur weiteren Stützung drehbar umfasst. Das eine Zahnrad 20 befindet sich dabei mit einem mit Innenverzahnung versehenen Zahnrad 33 des unteren Stellrings 3 in Eingriff, während das andere Zahnrad 20 sich mit einem eine Innenverzahnung aufweisendes Zahnrad 43 des oberen Stellrings 4 in Eingriff befindet. Das Zahnrad 43 ist dabei mittels Riefenverzahnung drehfest mit dem Stellring 4 und das Zahnrad 33 ebenfalls mittels Riefenverzahnung drehfest mit dem Stellring 3 verbunden. Bei einer Drehbewegung eines oder beider Stellringe 3,4 um die Mittelachse 10 wird somit die Drehbewegung des Stellrings 4 auf die Ventilspindel des Ventils 2b und durch eine Drehbewegung des Stellrings 3 um die Mittelachse 10 die Drehbewegung auf die Ventilspindel des Ventils 2a übertragen.
Zur Führung der Stellringe 3,4 sind Gleitringe 31,35,41 aus gut gleitfähigem, verschleißfestem Material vorgesehen. Der Gleitring 31 ist hierbei an der Stirnseite des Gehäuses 1 im Bereich des Kopfstücks 5 abgestützt, während der obere Gleitring 41 radial am Kopfstück 5 und axial an der Ringmutter 6 abgestützt ist. Die beiden Gleitringe 31,41 sind dabei mit einer zylindrisch gestuften Mantelfläche versehen, wobei die zylindrischen Mantelflächen ein Radiallager, während die Stufe am Gleitring 31 die Schulter 32 und die Stufe am Gleitring 41 die Schulter 42 bildet, die jeweils als Axiallager wirkt. Der zwischen den beiden Stellringen 3,4 angeordnete Gleitring 35 ist im Querschnitt rechteckig geformt und bildet neben seiner Gleitführung auch eine axiale Sicherung des im Stellring 3 angeordneten Zahnrades 33 und des im Stellring 4 angeordneten Zahnrades 43, wie es insbesondere aus Figur 3 der Zeichnung zu entnehmen ist. Die Außenmantelfläche der Stellringe 3,4 ist entsprechend dem Gehäuse 1 kegelstumpfartig ausgebildet, so dass ein bündiger, stufenfreier Übergang zwischen dem Außenmantel des Gehäuses 1, der Stellringe 3,4 und dem Wasserauslasskörper 7 hergestellt ist.
An dem Stellring 3 für das Ventil 2a ist radial an der Mantelfläche vorstehend ein Hebel 30 vorgesehen. In entsprechender Weise ist an dem Stellring 4 ein radial vorstehender Hebel 40 ausgebildet. Der Stellhebel 30 für das Ventil 2a, mit dem der Kaltwasserdurchfluss gesteuert wird, ist hierbei etwas länger ausgebildet als der Stellhebel 40 für die Steuerung des Heißwasserdurchflusses. Wie es insbesondere aus Figur 6 der Zeichnung zu entnehmen ist, befinden sich in der Absperrstellung beider Ventile 2a,2b die Hebel 30,40 in die gleiche Richtung zeigend etwa querliegend zur Front des Benutzers. Jeder Hebel 30,40 kann aus der Absperrstellung separat in Richtung eines Pfeils 9 bewegt werden. Bei der in gestrichelten Linien in der Zeichnung dargestellten Position der Stellhebel 30,40 befinden sich beide Ventile 2a,2b in der voll geöffneten Position, so dass in dieser Stellung der Ventile die gleiche Menge Kalt- und Heißwasser in den Mischwasserkanal 70 abgegeben wird und entsprechend temperiertes Mischwasser über den Wasserauslasskörper 7 austritt. Werden somit von der Absperrstellung beide Hebel 30,40 gleichzeitig in Richtung des Pfeils 9 bewegt, so nimmt die Gesamtdurchflussmenge von Mischwasser stetig zu. Selbstverständlich können aber auch die beiden Hebel 30,40 unterschiedlich zueinander gestellt werden, so dass die Gesamtdurchflussmenge und die Mischwassertemperatur variabel einstellbar sind.
An der oberen Stirnseite des Kopfstücks 5 ist auf der Mittelachse 10 ein Rohrnippel 60 mit Gewinde gedichtet an dem Kopfstück 5 befestigt, wobei der Mischwasserkanal 70 im Rohrnippel 60 mündet. Am Außenmantel des Rohrnippels 60 ist oberhalb der Stirnseite des Kopfstücks 5 ein Gewinde 61 vorgesehen, auf dem die Ringmutter 6 angeordnet ist. Die Ringmutter 6 weist dabei vier symmetrisch angeordnete Gewindebohrungen 600 auf, in die wahlweise eine Feststellschraube 62 einschraubbar ist. Alternativ können auch sechs oder acht symmetrisch angeordnete Gewindebohrungen vorgesehen werden. Auch können zwei gegenüberliegend in der Ringmutter angeordnete Feststellschrauben eingesetzt werden, wodurch eine symmetrische Druckbelastung der Ringmutter erreichbar ist. Zur Einstellung des axialen Spiels der Stellringe 3,4 mit den Gleitringen 31,35,41 wird die Ringmutter 6 auf dem Gewinde 61 mit einem definierten Drehmoment angezogen und danach um einen Winkelbogen gelöst bis die nächstliegende Gewindebohrung 600 mit einer konischen Einsenkung 51 am Kopfstück 50 in Überdeckung ist. Sodann wird die Feststellschraube 62 mit ihrer konischen Spitze 620 in die konische Einsenkung 51 eingedreht und die Ringmutter 6 ist in ihrer Drehstellung festgelegt und das axiale Spiel eingestellt.
An dem stromabwärts gelegenen Endbereich des Rohrnippels 60 ist am Außenmantel ein Dichtring 602 angeordnet, der bei aufgestecktem Wasserauslasskörper 7 dichtend an der Wandung der Aufnahmebohrung des Wasserauslasskörpers 7 anliegt. Stromaufwärts vor dem Dichtring 602 ist am Außenmantel eine umlaufende Ringnut 601 ausgebildet, in die im zusammengesteckten Zustand eine Zapfenschraube 71 radial vom Wasserauslasskörper 7 eindrehbar ist, wobei die Zapfenschraube 71 mit einem Zapfen 710 in die Ringnut 601 einfasst, so dass der Wasserauslasskörper 7 auf dem Rohrnippel 60 verschwenkbar aber axial festliegend gehalten ist. Soll der Wasserauslasskörper 7 wahlweise unverschwenkbar, d.h. starr mit dem Gehäuse 1 verbunden werden, so ist die Feststellschraube 62 zu entfernen und durch eine abgewandelte Feststellschraube mit einem axial vorstehenden Zapfen auszutauschen, der in der zusammenmontierten Stellung in eine im Wasserauslasskörper 7 ausgebildete Passbohrung 72 einfasst und damit den Wasserauslasskörper 7 feststellt.
Die vorstehend beschriebene Mischbatterie ist für die Anordnung an einen Wasch- und/oder Spültisch vorgesehen. Selbstverständlich kann die erfindungsgemäße Mischbatterie auch mit entsprechenden Anschlussmitteln an einer Gebäudewand oder dergleichen angeordnet werden.

In Figur 7 der Zeichnung ist eine geänderte Anordnung der Hebel 30,40 für die Betätigung von anders ausgebildeten Ventilen 2a,2b vorgesehen. In der Absperrstellung befinden sich die Hebel 30,40 um 180° verschwenkt zueinander gegenüberliegend. Wird der Hebel 30 in Richtung eines Pfeils 90 verschwenkt, so wird das Kaltwasserventil zunehmend geöffnet. In der in gestrichelten Linien gezeigten Position des Hebels 30 befindet sich das Kaltwasserventil in voll geöffneter Stellung. Wird der Hebel 40 von der Absperrstellung aus in Richtung eines Pfeils 91 bewegt, so öffnet sich das Heißwasserventil zunehmend. In der in gestrichelten Linien dargestellten Position des Hebels 40 befindet sich das Heißwasserventil in der voll geöffneten Stellung.

## Patentansprüche

1. Mischbatterie mit einem Gehäuse (1), das Anschlüsse für Kalt- und Heißwasser sowie wenigstens einen Auslass für Kalt-, Heiß- oder Mischwasser aufweist, und in dem zwei parallel angeordnete Ventile (2a,2b) für den separaten Zufluss von Kalt- oder Heißwasser angeordnet sind, wobei die beiden Ventile (2a,2b) jeweils eine Ventilspindel aufweisen, die einerseits mit einem Ventilglied und andererseits mit einem, mit einer Betätigungseinrichtung koppelbaren Zahnrad (20) verbunden ist, **dadurch gekennzeichnet, dass** als Betätigungseinrichtung zwei, am Gehäuse (1) drehbar angeordnete Stellringe (3,4) mit umlaufender Innenverzahnung vorgesehen sind, wobei die Innenverzahnung jeweils eines Stellringes (3,4) in jeder Drehstellung mit jeweils einem Zahnrad (20) eines der Ventile (2a,2b) in Eingriff steht.

2. Mischbatterie nach Anspruch 1, **dadurch gekennzeichnet, dass** die jeweilige Außenmantelfläche der Stellringe (3,4) bündig oder vorstehend zur Oberfläche des Gehäuses (1) ausgebildet ist.

3. Mischbatterie nach Anspruch 1 oder 2, **dadurch gekennzeichnet, dass** an den Stellringen (3,4) jeweils ein radial vorstehender Hebel (30,40) ausgebildet ist.

4. Mischbatterie nach Anspruch 3, **dadurch gekennzeichnet, dass** die Hebel (30,40) an den Stellringen (3,4) so positioniert sind, dass sie in der Absperrstellung der beiden Ventile (2a,2b) nebeneinander angeordnet sind, wobei beide Ventile (2a,2b) mit einer Drehung der Stellringe (3,4) in die gleiche Richtung in die Öffnungsstellung bringbar sind.

5. Mischbatterie nach Anspruch 3, **dadurch gekennzeichnet, dass** die Hebel (30,40) in den Stellringen (3,4) so positioniert sind, dass sie in der Absperrstellung der beiden Ventile (2a,2b) einander gegenüberliegen, wobei das eine Ventil (2b) mit einer Linksdrehung des Stellrings (4) und das andere Ventil (2a) mit einer Rechtsdrehung des Stellrings (3) in die Öffnungsstellung bringbar ist.

6. Mischbatterie nach wenigstens einem der vorhergehenden Ansprüche, **dadurch gekennzeichnet, dass** die Stellringe (3,4) eine gemeinsame Drehachse haben, die sich mit einer Mittelachse (10) des Gehäuses (1) deckt.

7. Mischbatterie nach wenigstens einem der vorhergehenden Ansprüche, **dadurch gekennzeichnet, dass** das Gehäuse (1) wenigstens an dem dem Benutzer zugekehrten Mantelbereich kegelstumpfförmig ausgebildet ist und die Mantelfläche der Stellringe (3,4) sowie wenigstens ein Teilbereich eines Wasserauslasskörpers (7) im Bereich des Übergangs zu den Stellringen (3,4) mit einer entsprechenden Kegelmantelaußenfläche versehen sind.

8. Mischbatterie nach wenigstens einem der vorhergehenden Ansprüche, **dadurch gekennzeichnet, dass** auf dem Gehäuse (1) an der Stirnseite mit den Aufnahmebohrungen für die beiden Ventile (2a,2b) ein Kopfstück (5) befestigt ist, wobei an der von dem Gehäuse (1) abgekehrten Stirnseite des Kopfstücks (5) auf einem Gewinde (61) eine Ringmutter (6) angeordnet ist, die mit einer Stirnseite einen einstellbaren Axialanschlag für die Stellringe (3,4) bildet.

9. Mischbatterie nach Anspruch 8, **dadurch gekennzeichnet, dass** die beiden Stellringe (3,4) von Gleitringen (31,41) radial und axial geführt sind.

10. Mischbatterie nach Anspruch 9, **dadurch gekennzeichnet, dass** der im Bereich der Ringmutter (6) vorgesehene Gleitring (41) und der im Bereich des Gehäuses (1) vorgesehene Gleitring (31) jeweils eine gestufte zylindrische Außenmantelfläche aufweist, an der der jeweilige Stellring (3,4) mit einer entsprechend gestuften Innenwandung anliegt, so dass die zylindrischen Mantelflächen Radiallager und die stufenförmigen Schultern (32,42) zwischen den beiden, einen unterschiedlichen Durchmesser aufweisenden Mantelflächen jeweils ein Axiallager bilden.

11. Mischbatterie nach wenigstens einem der vorhergehenden Ansprüche, **dadurch gekennzeichnet, dass** die Innenverzahnung jeweils an einem Zahnrad (33,43) ausgebildet ist, das drehfest in eine Aufnahme im Stellring (3,4) einschiebbar ist, wobei in der Einbaulage zwischen den beiden Stellringen (3,4) ein weiterer Gleitring (35) angeordnet ist, der so dimensioniert ist, dass er außerdem die beiden Zahnräder (33,43) jeweils in ihrer Stecklage in den Stellringen (3,4) sichert.

12. Mischbatterie nach wenigstens einem der vorhergehenden Ansprüche, **dadurch gekennzeichnet, dass** die Zahnräder (20) jeweils von einer Schraube (21) in ihrer Axialposition auf der Ventilspindel der Ventile (2a,2b) gehalten sind, wobei die Schraube (21) jeweils einen zylindrischen Zapfen (210) aufweist, der in der Einbaulage in ein am Kopfstück (5) vorgesehenes Radiallager einfasst.

13. Mischbatterie nach wenigstens einem der vorhergehenden Ansprüche, **dadurch gekennzeichnet, dass** die Zahnräder (20) jeweils mit einer angeformten, axial vorstehenden Hülse (200) einen am Kopfstück (5) vorgesehenen Hohlzapfen (50) als Stützlager umfasst.

14. Mischbatterie nach wenigstens einem der vorhergehenden Ansprüche, **dadurch gekennzeichnet, dass** jedes Ventil (2a,2b) von einer Abflusskammer (110,120) im Gehäuse (1) umgeben ist, wobei die Abflusskammern (110,120) mit einem Mischwasserkanal (70) verbunden sind.

15. Mischbatterie nach Anspruch 14, **dadurch gekennzeichnet, dass** der Mischwasserkanal (70) parallel zur Mittelachse (10) im Gehäuse (1) zum Kopfstück (5) geführt ist, wobei im Kopfstück (5) der Mischwasserkanal (70) der Mittelachse (10) zugeführt ist und koaxial zur Mittelachse (10) im Wasserauslasskörper (7) mündet.

16. Mischbatterie nach Anspruch 14 oder 15, **dadurch gekennzeichnet, dass** an der zum Gehäuse (1) abgekehrten Stirnseite des Kopfstücks (5) koaxial zur Mittelachse (10) ein Rohrnippel (60) gedichtet befestigt ist, in dem der Mischwasserkanal (70) mündet und auf dem der Wasserauslasskörper (7) angeordnet ist.

17. Mischbatterie nach Anspruch 16, **dadurch gekennzeichnet, dass** am Außenmantel des Rohrnippels (60) ein Gewinde (61) für die Ringmutter (6) ausgebildet ist, wobei in der Ringmutter (6) parallel zur Mittelachse (10) wenigstens eine Gewindebohrung (600) für die Aufnahme einer Feststellschraube (62) vorgesehen ist.

18. Mischbatterie nach Anspruch 17, **dadurch gekennzeichnet, dass** wenigstens zwei symmetrisch angeordnete Gewindebohrungen (600) vorgesehen sind, wobei in der Stirnseite des Kopfstücks (5) eine konische Einsenkung (51) ausgebildet ist, in die die Feststellschraube (62) mit einer konischen Spitze (620) eindrehbar ist, so dass die Stellringe (3,4) mit den Gleitringen (31,35,41) von der Ringmutter (6) mit dem erforderlichen Axialspiel zum Gehäuse (1) einstellbar sind.

19. Mischbatterie nach Anspruch 17, **dadurch gekennzeichnet, dass** zwei gegenüberliegend angeordnete Feststellschrauben in der Ringmutter (6) vorgesehen sind.

20. Mischbatterie nach wenigstens einem der vorhergehenden Ansprüche, **dadurch gekennzeichnet, dass** der Rohrnippel (60) am Außenmantel in einer Ringnut einen Dichtring (602) zur Abdichtung zum Wasserauslaufkörper (7) aufweist, wobei stromaufwärts vor dem Dichtring (602) eine Ringnut (601) für den Eingriff einer radial in den Wasserauslasskörper (7) eindrehbaren Zapfenschraube (71) ausgebildet ist, die mit ihrem Zapfen (710) in die Ringnut (601) einfasst und den Wasserauslasskörper (7) auf dem Rohrnippel (60) verschwenkbar aber axial festliegend hält.

21. Mischbatterie nach Anspruch 20, **dadurch gekennzeichnet, dass** die Feststellschraube (62) wahlweise mit einem zylindrischen Ansatz versehen ist, der in der Stecklage in eine Passbohrung (72) des Wasserauslasskörpers (7) einfasst, so dass der Wasserauslasskörper (7) wahlweise verschwenkbar oder feststehend anordbar ist.

22. Mischbatterie nach wenigstens einem der vorhergehenden Ansprüche, **dadurch gekennzeichnet, dass** im Rohrnippel (60) am stromabwärts gelegenen Endbereich seiner Durchgangsöffnung ein Polygonprofil (603), z.B. ein Sechskantprofil, für den Ansatz eines Drehwerkzeugs ausgebildet ist.

## Claims

1. Mixer tap having a housing (1), which has connections for cold and hot water as well as at least one outlet for cold, hot or mixed water, and in which two valves (2a, 2b) arranged parallel are arranged for separate inflow of cold or hot water, the two valves (2a, 2b) each comprising a valve shaft, which at one end is connected to a valve member and at the other end is connected to gearwheel (20) couplable to an actuating device, **characterised in that**, as actuating device, two control rings (3, 4) rotatably arranged on the housing (1) and having a circumferential internal toothing are provided, the internal toothing of a respective control ring (3, 4) being in engagement in each rotated position with the gearwheel (20) of a respective one of the valves (2, 2b).

2. Mixer tap according to claim 1, **characterised in that** the respective outer surface of the control rings (3, 4) is constructed to be flush or proud with respect to the surface of the housing (1).

3. Mixer tap according to claim 1 or 2, **characterised in that** a respective radially projecting lever (30, 40) is formed on the control rings (3, 4).

4. Mixer tap according to claim 3, **characterised in that** the levers (30, 40) on the control rings (3, 4) are positioned so that they are arranged side by side when both valves (2a, 2b) are in the shut-off position, wherein it is possible to bring both valves (2a, 2b) into the open position by a rotation of the control rings (3, 4) in the same direction.

5. Mixer tap according to claim 3, **characterised in that** the levers (30, 40) in the control rings (3, 4) are positioned so that they lie opposite one another when both valves (2a, 2b) are in the shut-off position, wherein it is possible to bring the one valve (2b) with an anticlockwise rotation of the control ring (4) and the other valve (2a) with a clockwise rotation of the control ring (3) into the open position.

6. Mixer tap according to at least one of the preceding claims, **characterised in that** the control rings (3, 4) have a common axis of rotation that coincides with the central axis (10) of the housing (1).

7. Mixer tap according to at least one of the preceding claims, **characterised in that** the housing (1) is of frustoconical form, at least in the surface region facing the user, and the outer surface of the control rings (3, 4) as well as at least a sub-region of a water-outlet member (7) in the region of the transition to the control rings (3, 4) are provided with a corresponding conical outer surface.

8. Mixer tap according to at least one of the preceding claims, **characterised in that** a top part (5) is secured on the housing (1) at the front end having the receiving bores for the two valves (2a, 2b), an annular nut (6), which with one end face forms an adjustable axial stop for the control rings (3, 4), being arranged on a thread (61) on the front face of the top part (5) remote from the housing (1).

9. Mixer tap according to claim 8, **characterised in that** the two control rings (3, 4) are guided radially and axially by sliding-contact rings (31, 41).

10. Mixer tap according to claim 9, **characterised in that** the sliding-contact ring (41) provided in the region of the annular nut (6) and the sliding-contact ring (31) provided in the region of the housing (1) each have a stepped cylindrical outer surface, which the respective control ring (3, 4) adjoins with a correspondingly stepped inner wall, so that the cylindrical outer surfaces form radial bearings and the step-form shoulders (32, 42) between the two outer surfaces of different diameter each form an axial bearing.

11. Mixer tap according to at least one of the preceding claims, **characterised in that** the internal toothing is formed on a gearwheel (33, 34) that is non-rotatably insertable into a seat in the control ring (3, 4), wherein in the installed position a further sliding-contact ring (35) is arranged between the two control rings (3, 4) and is dimensioned so that it additionally secures the two gearwheels (33, 43) in their respective inserted positions in the control rings (3, 4).

12. Mixer tap according to at least one of the preceding claims, **characterised in that** the gearwheels (20) are each held by a screw (21) in their axial position on the valve shaft of the valves (2a, 2b), each screw (21) having a cylindrical pin (210), which in the installed position engages in a radial bearing provided on the top part (5).

13. Mixer tap according to at least one of the preceding claims, **characterised in that** with an integrally moulded, axially projecting sleeve (200) each gearwheel (20) encloses, in the form of a supporting bearing, a hollow pin (50) provided on the top part (5).

14. Mixer tap according to at least one of the preceding claims, **characterised in that** each valve (2a, 2b) is surrounded by an outlet chamber (110, 120) in the housing (1), the outlet chambers (110, 120) being connected to a mixed water channel (70).

15. Mixer tap according to claim 14, **characterised in that** the mixed water channel (70) is led, parallel to the central axis (10) in the housing (1), as far as the top part (5), and in the top part (5) the mixed water channel (70) is led towards the central axis (10) and opens out coaxial with the central axis (10) into the water outlet member (7).

16. Mixer tap according to claim 14 or 15, **characterised in that** on the end face of the top part (5) remote from the housing (1), coaxial with the central axis (10), a tubular nipple (60) is secured in sealed manner, into which the mixed water channel (70) opens and on which the water outlet member (7) is arranged.

17. Mixer tap according to claim 16, **characterised in that** a thread (61) for the annular nut (6) is formed on the outer surface of the tubular nipple (60), at least one threaded bore (600) for receiving a fixing screw (62) being provided parallel to the central axis (10) in the annular nut (6).

18. Mixer tap according to claim 17, **characterised in that** at least two symmetrically arranged threaded bores (600) are provided, wherein in the end face of the top part (5) there is formed a conical recess (51) into which the fixing screw (62) having a conical tip (620) can be screwed, so that the control rings (3, 4) with the sliding-contact rings (31, 35, 41) are adjustable by the annular nut (6) with the required axial clearance with respect to the housing (1).

19. Mixer tap according to claim 17, **characterised in that** two oppositely arranged fixing screws are provided in the annular nut (6).

20. Mixer tap according to at least one of the preceding claims, **characterised in that** on its outer surface the tubular nipple (60) has in an annular groove an annular seal (602) for providing a seal with respect to the water outlet member (7), wherein upstream of the annular seal (602) there is formed an annular groove (601) for engagement of a shoulder screw (71) screwable radially into the water outlet member (7), the shoulder screw engaging with its pin (710) in the annular groove (601) and holding the water outlet member (7), so that it is swivellable yet axially fixed, on the tubular nipple (60).

21. Mixer tap according to claim 20, **characterised in that** the fixing screw (62) is provided optionally with a cylindrical shoulder, which in the mounted position engages in a locating bore (72) of the water outlet member (7), so that the water outlet member (7) can be arranged either to swivel or to be fixed.

22. Mixer tap according to at least one of the preceding claims, **characterised in that** in the tubular nipple (60) at the downstream end region of its through-opening there is formed a polygonal profile (603), for example, a hexagonal profile, for placement of a turning tool.

## Revendications

1. Mitigeur comportant un corps (1) muni de branchements pour l'eau chaude et l'eau froide ainsi que d'au moins une sortie d'eau froide, d'eau chaude ou d'eau mélangée et deux vannes (2a, 2b) en parallèle pour l'alimentation séparée d'eau froide ou d'eau chaude,
les deux vannes (2a, 2b) ayant chacune une broche de vanne reliée d'un côté à un organe de vanne et de l'autre à une roue dentée (20) susceptible d'être couplée à une installation d'actionnement,
**caractérisé en ce que**
l'installation d'actionnement comprend deux bagues de réglage (3, 4) montées à rotation sur le corps (1) et ayant une denture intérieure périphérique,
la denture intérieure de chaque bague de réglage (3, 4) étant en prise avec une roue dentée (20) de l'une des vannes (2a, 2b) dans chaque position de rotation.

2. Mitigeur selon la revendication 1,
**caractérisé en ce que**
la surface-enveloppe extérieure respective des bagues de réglage (3, 4) est à niveau de la surface extérieure du corps (1) ou en saillie par rapport à celle-ci.

3. Mitigeur selon la revendication 1 ou 2,
**caractérisé en ce que**
les bagues de réglage (3, 4) sont munies chacune d'un levier (30, 40) radialement en saillie.

4. Mitigeur selon la revendication 3,
**caractérisé en ce que**
les leviers (30, 40) sont positionnés au niveau des bagues de réglage (3, 4) de façon à être juxtaposés lorsque les deux vannes (2a, 2b) sont en position de fermeture,
les deux vannes (2a, 2b) pouvant être mises en position d'ouverture en tournant les bagues de réglage (3, 4) dans le même sens.

5. Mitigeur selon la revendication 3,
**caractérisé en ce que**
les leviers (30, 40) sont positionnés dans les bagues de réglage (3, 4) de sorte qu'en position de fermeture des deux vannes (2a, 2b) ils se trouvent opposés,
une vanne (2b) se mettant en position d'ouverture par rotation à gauche de la bague de réglage (4) et l'autre vanne (2a), par rotation à droite de la vanne de réglage (3).

6. Mitigeur selon au moins l'une des revendications précédentes,
**caractérisé en ce que**
les bagues de réglage (3, 4) ont un axe de rotation commun qui coïncide avec l'axe (17) du corps (1).

7. Mitigeur selon au moins l'une des revendications précédentes,
**caractérisé en ce qu'**
au moins du corps tournée vers l'utilisateur la zone de surface-enveloppe (1) est de forme tronconique et la surface-enveloppe des bagues de réglage (3, 4) et au moins une partie du bec (7) au niveau de la jonction avec les bagues de réglage (3, 4) ont une surface extérieure tronconique correspondante.

8. Mitigeur selon au moins l'une des revendications précédentes,
**caractérisé en ce qu'**
au niveau de la face frontale du corps (1) munie des perçages de réception pour les deux vannes (2a, 2b) est fixée une tête (5) et la face frontale de la tête (5) non tournée vers le corps (1) porte sur un filetage (61), un écrou annulaire (6) formant une butée axiale réglable avec une face frontale pour les bagues de réglage (3, 4).

9. Mitigeur selon la revendication 8,
**caractérisé en ce que**
les deux bagues de réglage (3, 4) sont guidées radialement et axialement par des bagues glissantes (31, 41).

10. Mitigeur selon la revendication 9,
**caractérisé en ce que**
la bague de glissement (41) au niveau de l'écrou annulaire (6) et la bague de glissement (31) au niveau du corps (1) ont chacune une surface-enveloppe extérieure cylindrique étagée contre laquelle s'appuie la paroi intérieure étagée de manière correspondante de chaque bague de réglage (3, 4) de façon que les surfaces-enveloppes cylindriques forment des paliers radiaux et que les épaulements en gradins (32, 42) entre les deux parties forment des surfaces-enveloppes de diamètres différents pour chaque fois un palier axial.

11. Mitigeur selon au moins l'une des revendications précédentes,
**caractérisé en ce que**
la denture intérieure est prévue respectivement sur une roue dentée (33, 43) introduite solidairement en rotation dans un logement de la bague de réglage (3, 4) et en position de montage entre les deux bagues de réglage (3, 4) se trouve une autre bague de glissement (35) dimensionnée pour fixer en outre les deux roues dentées (33, 43) chacune dans sa position engagée dans les bagues de réglage (3, 4).

12. Mitigeur selon au moins l'une des revendications précédentes,
**caractérisé en ce que**
chacune des roues dentées (20) est maintenue par une vis (21) dans sa position axiale sur la broche des vannes (2a, 2b), et
chaque vis (21) a un bouton cylindrique (210) qui s'engage en position de montage dans un palier radial de la pièce de tête (5).

13. Mitigeur selon au moins l'une des revendications précédentes,
**caractérisé en ce que**
les roues dentées (20) ont chacune un manchon (200) axialement en saillie, faisant corps et entourant un tourillon creux (50) de la pièce de tête (5) servant de palier d'appui.

14. Mitigeur selon au moins l'une des revendications précédentes,
**caractérisé en ce que**
chaque vanne (2a, 2b) est entourée dans le corps (1) par une chambre de sortie (110, 120), ces chambres (110, 120) étant reliées au canal des eaux mélangées (70).

15. Mitigeur selon la revendication 14,
**caractérisé en ce que**
le canal des eaux mélangées (70) est conduit parallèlement à l'axe (10) du corps (1) dans la pièce de tête (5),
la pièce de tête (5) comportant le canal des eaux mélangées (70) suivant l'axe (10) et débouchant dans le bec de sortie d'eau (7) coaxialement à l'axe (10).

16. Mitigeur selon la revendication 14 ou 15,
**caractérisé en ce que**
la face frontale de la pièce de tête (5) à l'opposé du corps (1) comporte coaxialement à l'axe (10), un nipple de tube (60) (embout) fixé de manière étanche et dans lequel débouche le canal des eaux mélangées (70) et sur lequel est monté le bec de sortie d'eau (7).

17. Mitigeur selon la revendication 16,
**caractérisé en ce que**
l'enveloppe extérieure du nipple de tube (60) comporte un filetage (61) pour l'écrou annulaire (6),
au moins un taraudage (600) est prévu dans l'écrou annulaire (6) parallèlement à l'axe (10) pour recevoir une vis de blocage (62).

18. Mitigeur selon la revendication 17,
**caractérisé en ce qu'**
au moins deux taraudages (600) sont installés de manière symétrique, et
dans la face frontale de la pièce de tête (5) se trouve une cavité (51) conique dans laquelle peut pénétrer la pointe conique (620) de la vis de blocage (62) pour régler les bagues de réglage (3, 4) avec les bagues de glissement (31, 35, 41) à l'aide de l'écrou annulaire (6) avec le jeu axial requis par rapport au corps (1).

19. Mitigeur selon la revendication 17,
**caractérisé par**
deux vis de blocage prévues de manière opposée dans l'écrou annulaire (6).

20. Mitigeur selon au moins l'une des revendications précédentes,
**caractérisé en ce que**
le nipple de tube (60) comporte dans une rainure annulaire prévue dans son enveloppe extérieure, un joint d'étanchéité (602) pour étancher par rapport au bec de sortie d'eau (7),
et en amont du joint d'étanchéité (602) une rainure annulaire (601) reçoit une vis à téton (71) qui se visse dans le bec de sortie d'eau (7), cette vis venant en prise avec son téton (710) dans la rainure annulaire (601) pour retenir axialement le bec de sortie d'eau (7) sur le nipple de tube (60) tout en permettant son pivotement.

21. Mitigeur selon la revendication 20,
**caractérisé en ce que**
la vis de blocage (62) peut être munie au choix d'un prolongement cylindrique qui en position engagée vient dans un perçage ajusté (72) du bec de sortie d'eau (7) pour que ce bec (7) puisse être, au choix, basculé ou installé de manière fixe.

22. Mitigeur selon au moins l'une des revendications précédentes,
**caractérisé en ce que**
dans le nipple de tube (60) dans la zone d'extrémité située en aval de son orifice de passage un profil polygonal (603), par exemple un profil à six pans, peut recevoir un outil de vissage.
